# EUROPEAN PATENT APPLICATION

(11) **EP 4 832 140 A1**
(43) Date of publication of application: **28.10.2026**
(21) Application number: 24905869.4
(22) Date of filing: 01.11.2024
(51) Int. Cl.: H01M 10/0587, H01M 10/0525, H01M 10/42, H01M 10/0567

(54) **ELECTROCHEMICAL DEVICE AND ELECTRONIC DEVICE**

(30) Priority: 22.12.2023 CN 202311785375
(71) Applicant: Ningde Amperex Technology Limited, Ningde, Fujian 352100 (CN)
(72) Inventor: LIU, Jianyu, Ningde, Fujian 352100 (CN); CUI, Hui, Ningde, Fujian 352100 (CN); TANG, Chao, Ningde, Fujian 352100 (CN)
(74) Representative: Kraus & Lederer PartGmbB
(86) International application number: PCT/CN2024/129409
(87) International publication number: WO 2025/130381

(57) **Abstract**

This application provides an electrochemical device and an electronic device. The electrochemical device includes an electrode assembly and an electrolyte. The electrode assembly has a wound structure, and the electrode assembly includes a bent portion and a flat portion, where the flat portion has a maximum length of L mm, the bent portion has a maximum radius of D mm, and 5<L/D< 10. The electrolyte includes a compound represented by formula (I), where based on a mass of the electrolyte, a mass percentage of the compound represented by formula (I) is A%, and 30≤A≤80. In this application, the adjustment of LID of the electrode assembly and the adjustment of electrolyte components are combined to improve the high-temperature cycling performance of the electrochemical device.

## Description

This application claims priority to Chinese Patent Application No. 202311785375.9, filed with the China National Intellectual Property Administration on December 22, 2023 and entitled "ELECTROCHEMICAL DEVICE AND ELECTRONIC DEVICE", which is incorporated herein by reference in its entirety.

### TECHNICAL FIELD

This application relates to the field of electrochemical technology, and in particular, to an electrochemical device and an electronic device.

### BACKGROUND

Electrochemical devices, such as lithium-ion batteries, have the advantages such as high energy storage density, high open-circuit voltage, low self-discharge rate, long cycle life, and good safety, and are widely used in various fields such as portable energy storage, electronic equipment, and electric vehicles. With the rapid development of lithium-ion batteries in consumer terminals and other fields, the market has increasingly high requirements for the performance of lithium-ion batteries, such as the high-temperature cycling performance. As important components of lithium-ion batteries, electrode assemblies and electrolytes urgently need to be improved to obtain lithium-ion batteries with good high-temperature cycling performance.

### SUMMARY

This application is intended to provide an electrochemical device and an electronic device to improve the high-temperature cycling performance of the electrochemical device. The specific technical solutions are as follows:
A first aspect of this application provides an electrochemical device including an electrode assembly and an electrolyte, where the electrode assembly has a wound structure, and the electrode assembly includes a bent portion and a flat portion, where the flat portion has a maximum length of L mm, the bent portion has a maximum radius of D mm, and 5≤L/D≤10; and the electrolyte includes a compound represented by formula (I): 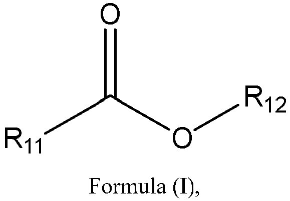 where R₁₁ and R₁₂ are each independently selected from a fluorine-substituted or unsubstituted C₁ to C₁₀ alkyl, and at least one of R₁₁ or R₁₂ is fluorine-substituted; where based on a mass of the electrolyte, a mass percentage of the compound represented by formula (I) is A%, and 30≤A≤80. In this application, the L/D value of the electrode assembly with the wound structure is adjusted within the range of this application, the compound represented by formula (I) is added to the electrolyte, and the percentage of the compound represented by formula (I) is within the range of this application, so that the bent portion in the electrode assembly has an appropriate volume proportion, and the compound represented by formula (I) has strong oxidation resistance. This can reduce the oxidation reactions between a positive electrode active material and the electrolyte, widen an oxidation window of the electrolyte, enhance the stability of a positive electrode interface, reduce a consumption rate of the electrolyte, and delay a depletion rate of the electrolyte in the bent portion of the electrode assembly, thereby improving the high-temperature cycling performance of the electrochemical device, and allowing the electrochemical device to have relatively low direct current impedance at a low state of charge (SOC).

In some embodiments of this application, 5≤L≤30 or 1≤D≤5. The value of L or D is adjusted within the above range, so that the value of L/D can be adjusted within the range of this application. This is conducive to limiting the volume proportion of the bent portion in the electrode assembly, exerting the effect of the compound represented by formula (I), enhancing the stability of the positive electrode interface, reducing the consumption rate of the electrolyte, and delaying the depletion rate of the electrolyte in the bent portion of the electrode assembly, thereby helping to improve the high-temperature cycling performance of the electrochemical device, and helping to allow the electrochemical device to have relatively low direct current impedance at low SOC.

In some embodiments of this application, the electrochemical device satisfies any one of the following: (a) 40≤A≤75; (b) 7≤L/D≤9; (c) 10≤L≤20; or (d) 1.5≤D≤2.5. Adjusting the above parameters allows the volume proportion of the bent portion in the electrode assembly to be appropriate, which is more conducive to exerting the effect of the compound represented by formula (I), enhancing the stability of the positive electrode interface, reducing the consumption rate of the electrolyte, and delaying the depletion rate of the electrolyte in the bent portion of the electrode assembly, thereby helping to further improve the high-temperature cycling performance of the electrochemical device, and helping to further allow the electrochemical device to have relatively low direct current impedance at low SOC.

In some embodiments of this application, the electrode assembly has a width of W mm, W=L+2D, and 10≤W≤40. The width W of the electrode assembly being within the above range is more conducive to reducing the consumption rate of the electrolyte and delaying the depletion rate of the electrolyte in the bent portion of the electrode assembly, thereby helping to improve the high-temperature cycling performance of the electrochemical device, and helping to allow the electrochemical device to have relatively low direct current impedance at low SOC.

In some embodiments of this application, the compound represented by formula (I) includes at least one of the following compounds:

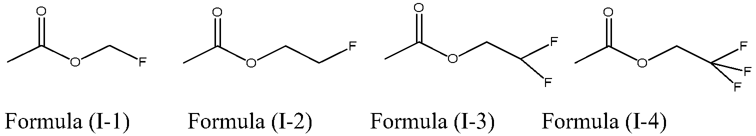

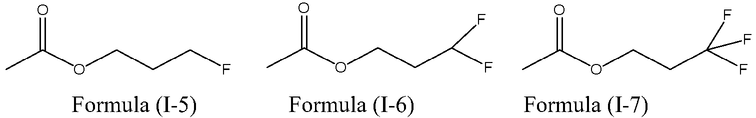

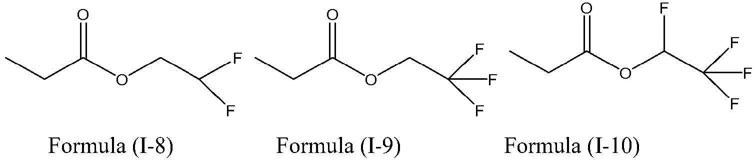

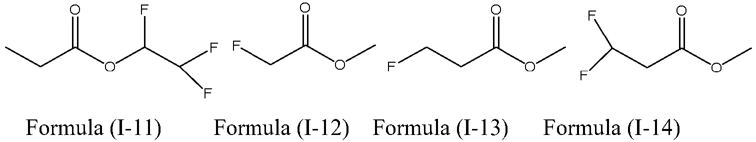

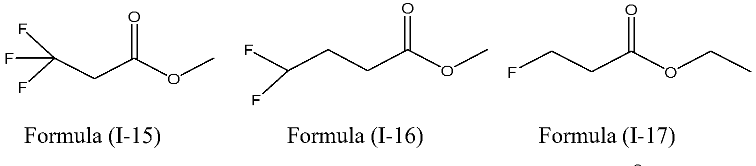

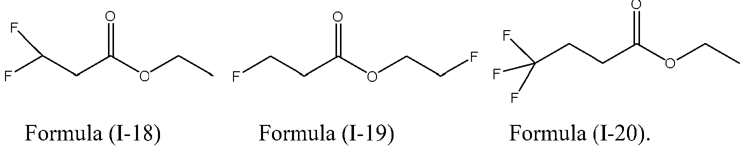

In the electrochemical device of this application, the electrolyte including the compound represented by formula (I) within the above range can better exert the oxidation resistance of the compound represented by formula (I), allow the electrochemical device to have good stability of the positive electrode interface, reduce the consumption rate of the electrolyte, and delay the depletion rate of the electrolyte in the bent portion of the electrode assembly, thereby helping to improve the high-temperature cycling performance of the electrochemical device, and helping to allow the electrochemical device to have relatively low direct current impedance at low SOC.

In some embodiments of this application, the electrolyte includes a non-fluorinated carboxylate ester, where the non-fluorinated carboxylate ester includes at least one of methyl formate, ethyl formate, methyl acetate, ethyl acetate, propyl acetate, methyl propionate, ethyl propionate, or propyl propionate; and based on the mass of the electrolyte, a mass percentage of the non-fluorinated carboxylate ester is B%, and 10<B<60. Further introducing the above type of non-fluorinated carboxylate ester into the electrolyte and adjusting its mass percentage B% within the above range can allow the electrolyte to have an appropriate viscosity, improve the wettability of the positive electrode interface and a negative electrode interface, and reduce polarization, thereby helping to improve the high-temperature cycling performance of the electrochemical device, and helping to allow the electrochemical device to have relatively low direct current impedance at low SOC.

In some embodiments of this application, the electrolyte includes a cyclic carbonate, where the cyclic carbonate includes at least one of ethylene carbonate, propylene carbonate, butylene carbonate, or vinylethylene carbonate; and based on the mass of the electrolyte, a mass percentage of the cyclic carbonate is C%, and 0≤C≤10. Further introducing the cyclic carbonate into the electrolyte and adjusting its mass percentage C% within the above range are conducive to the dissociation of a lithium salt, improve the conductivity of the electrolyte, are also conducive to the film formation of anions of the lithium salt, adjust a solvation structure of the electrolyte, and enhance the stability of the positive electrode interface and the negative electrode interface, thereby helping to improve the high-temperature cycling performance of the electrochemical device, and helping to allow the electrochemical device to have relatively low direct current impedance at low SOC.

In some embodiments of this application, the electrolyte includes a nitrile additive, where the nitrile additive includes at least one of succinonitrile, glutaronitrile, adiponitrile, pimelonitrile, suberonitrile, methylglutaronitrile, 1,3,5-pentanetricarbonitrile, 1,2,3-propanetricarbonitrile, 1,3,6-hexanetricarbonitrile, or 1,2,3-tris(2-cyanoethoxy)propane; and based on the mass of the electrolyte, a mass percentage of the nitrile additive is E%, and 2≤E≤10. Further introducing the above type of nitrile additive into the electrolyte and adjusting its mass percentage E% within the above range can further enhance the stability of the positive electrode interface, thereby helping to improve the high-temperature cycling performance of the electrochemical device, and helping to allow the electrochemical device to have relatively low direct current impedance at low SOC.

In some embodiments of this application, the electrolyte includes a boron-containing compound, where the boron-containing compound includes at least one of lithium bis(1,1-trifluoromethyl oxalate)borate, lithium bis(1-trifluoromethyl oxalate)borate, lithium difluoro(1,1-trifluoromethyl)oxalate borate, lithium difluorooxalate borate (LiDFOB), lithium bis(oxalate)borate (LiBOB), lithium bis(1,1-trifluoromethyl malonate)borate, lithium fluoromalonate difluoroborate, or lithium bis(fluoromalonate)borate; and based on the mass of the electrolyte, a mass percentage of the boron-containing compound is F%, and 0.01≤F≤2. Including the above type of boron-containing compound in the electrolyte and adjusting its mass percentage F% within the above range can synergistically act with the compound represented by formula (I) to enhance the stability of the positive electrode interface and the negative electrode interface, thereby helping to improve the high-temperature cycling performance of the electrochemical device, and helping to allow the electrochemical device to have relatively low direct current impedance at low SOC.

A second aspect of this application provides an electronic device including the electrochemical device provided in the first aspect of this application.

The beneficial effects of this application are as follows:
This application provides an electrochemical device and an electronic device. The electrochemical device includes an electrode assembly and an electrolyte, where the electrode assembly has a wound structure, and the electrode assembly includes a bent portion and a flat portion, where the flat portion has a maximum length of L mm, the bent portion has a maximum radius of D mm, and 5≤L/D≤10; and the electrolyte includes a compound represented by formula (I), where based on a mass of the electrolyte, a mass percentage of the compound represented by formula (I) is A%, and 30≤A≤80. In this application, the L/D value of the electrode assembly with the wound structure is adjusted within the range of this application, the compound represented by formula (I) is added to the electrolyte, and the percentage of the compound represented by formula (I) is within the range of this application, so that the bent portion in the electrode assembly has an appropriate volume proportion, and the compound represented by formula (I) has strong oxidation resistance. This can reduce the oxidation reactions between a positive electrode active material and the electrolyte, widen an oxidation window of the electrolyte, enhance the stability of a positive electrode interface, reduce a consumption rate of the electrolyte, and delay a depletion rate of the electrolyte in the bent portion of the electrode assembly, thereby improving the high-temperature cycling performance of the electrochemical device, and allowing the electrochemical device to have relatively low direct current impedance at low SOC.

Certainly, any product or method implementing this application does not necessarily need to achieve all the advantages described above at the same time.

### BRIEF DESCRIPTION OF DRAWINGS

To more clearly illustrate some embodiments of this application or the technical solutions in the prior art, the drawings to be used in the description of these embodiments or the prior art will be briefly introduced below. Apparently, these embodiments in the following description are only some embodiments of this application. For those of ordinary skill in the art, other embodiments can also be obtained based on these drawings.

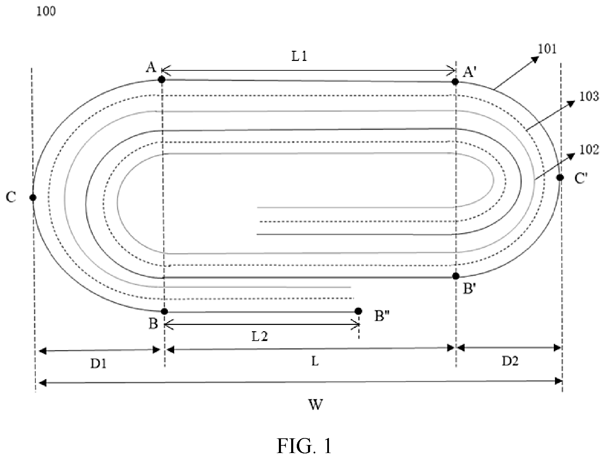

FIG. 1 is a schematic structural diagram of an electrode assembly according to an embodiment of this application.

### DETAILED DESCRIPTION

The technical solutions in some embodiments of this application will be clearly and completely described below in conjunction with the drawings in these embodiments of this application. Apparently, the described embodiments are only some rather than all of these embodiments of this application. All other embodiments obtained by those skilled in the art based on this application fall within the scope of protection of this application.

It should be noted that in the specific embodiments of this application, a lithium-ion battery is used as an example of an electrochemical device to explain this application, but the electrochemical device of this application is not limited to the lithium-ion battery.

A first aspect of this application provides an electrochemical device including an electrode assembly and an electrolyte. As shown in FIG. 1, the electrode assembly has a wound structure, where the electrode assembly includes a bent portion and a flat portion, where the flat portion has a maximum length of L mm, the bent portion has a maximum radius of D mm, and 5≤L/D≤10, preferably 7≤L/D≤9; and the electrolyte includes a compound represented by formula (I): 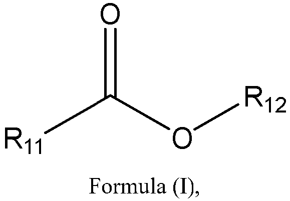 where R₁₁ and R₁₂ are each independently selected from a fluorine-substituted or unsubstituted C₁ to C₁₀ alkyl, and at least one of R₁₁ or R₁₂ is fluorine-substituted. In some embodiments of this application, R₁₁ and R₁₂ are each independently a fluorine-substituted or unsubstituted group selected from methyl, ethyl, or propyl; and at least one of R₁₁ or R₁₂ is fluorine-substituted. Based on a mass of the electrolyte, a mass percentage of the compound represented by formula (I) is A%, and 30≤A≤80, preferably 40≤A≤75. For example, L/D may be 5, 6, 6.4, 7, 7.6, 8, 8.3, 9, 10, or a range defined by any two of the above values. For example, A may be 30, 40, 44, 50, 53, 60, 66, 70, 80, or a range defined by any two of the above values.

In this application, the maximum radius D of the "bent portion" and the maximum length L of the "flat portion" are tested based on an outermost electrode of the wound electrode assembly (that is, an electrode directly opposite to a package that encapsulates the electrode assembly). An outermost side of the bent portion and an outermost side of the flat portion are alternately connected to form the outermost electrode of the wound electrode assembly. The outermost side of the bent portion refers to an arc-shaped portion of the outermost electrode of the wound electrode assembly, which includes a first bent portion formed by a first arc and a second bent portion formed by a second arc. The outermost side of the flat portion refers to a flat portion of the outermost electrode of the wound electrode assembly, that is, an electrode portion between the first bent portion and the second bent portion, which includes a first flat portion and a second flat portion. The "radius of the bent portion" refers to a distance between a line segment connecting two endpoints of the first (or second) arc of the first (or second) bent portion and an intersection point of a perpendicular bisector of the line segment and the first (or second) arc. Since the electrode assembly has outermost sides of two bent portions, a larger one of radii of the two bent portions is taken as the maximum radius D of the bent portion of the electrode assembly. The "length of the flat portion" refers to a length of the first flat portion and a length of the second flat portion. Since one of the first flat portion and the second flat portion is a winding termination end of the electrode assembly, a larger value of the flat portion lengths is taken as the maximum length L of the flat portion.

FIG. 1 is a schematic structural diagram of an electrode assembly according to an embodiment of this application. The electrode assembly 100 includes a positive electrode plate 101, a negative electrode plate 102, and a separator 103 between the positive electrode plate 101 and the negative electrode plate 102 that are stacked. The wound electrode assembly is flat, where in a width (W) direction of the electrode assembly, an outermost electrode of the electrode assembly includes a first bent portion (left side), a second bent portion (right side), a first flat portion (upper side), and a second flat portion (lower side). The second bent portion, the first flat portion, the first bent portion, and the second flat portion are sequentially connected to form the outermost electrode of the electrode assembly. The first bent portion is formed by a first arc passing through points A, C, and B, where the point A is an intersection point of the first bent portion and the first flat portion, and the point B is an intersection point of the first bent portion and the second flat portion. The second bent portion is formed by a second arc passing through points A', C', and B', where the point A' is an intersection point of the second bent portion and the first flat portion, and the point B' is an intersection point of the second bent portion and a flat portion of a penultimate-layer electrode corresponding to the second flat portion. The first flat portion is formed by a line segment between the point A and the point A', and the second flat portion is formed by a line segment between the point B and a point B" (the point B" is an end point of the outermost electrode). The points A and B are endpoints of the first arc, the point C is an intersection point of a perpendicular bisector of a line segment between the point A and the point B and the first arc, and a distance from the line segment between the point A and the point B to the point C is a radius D1 of the first bent portion. The points A' and B' are endpoints of the second arc, the point C' is an intersection point of a perpendicular bisector of a line segment between the point A' and the point B' and the second arc, and a distance from the line segment between the point A' and the point B' to the point C' is a radius D2 of the second bent portion. A larger one of D1 and D2 of the bent portions is recorded as a maximum radius D of the bent portion (that is, a radius D1 of the first bent portion in FIG. 1). A length of the line segment between the point A and the point A' is a length L1 of the first flat portion, and a length of the line segment between the point B and the point B" is a length L2 of the second flat portion. A larger one of L1 and L2 is recorded as a maximum length L of the flat portion (that is, a length L1 of the first flat portion in FIG. 1).

In the electrochemical device of this application, the electrode assembly has a wound structure. During cycling, due to the rebound of electrode plates, an electrolyte in the bent portion of the electrode assembly is easily squeezed out, and with the continuous consumption of the electrolyte, the electrolyte is depleted, affecting the transport of lithium ions, thereby affecting the high-temperature cycling performance of the electrochemical device. In addition, when the electrochemical device is at a low state of charge (SOC), for example, 20% SOC, the direct current impedance is too high, thereby affecting the normal operation of the electrochemical device. In this application, a volume proportion of the bent portion in the electrode assembly is limited within a certain range, that is, a ratio of the maximum length L of the flat portion to the maximum radius D of the bent portion in the electrode assembly is limited within a certain range, a compound represented by formula (I) is introduced into the electrolyte, and its mass percentage A% is adjusted within the above range. Due to the strong oxidation resistance of the compound represented by formula (I), the oxidation reactions between a positive electrode active material and the electrolyte can be reduced, and an oxidation window of the electrolyte can be widened, allowing the electrochemical device to have good stability of a positive electrode interface, reducing a consumption rate of the electrolyte, and delaying a depletion rate of the electrolyte in the bent portion of the electrode assembly, thereby improving the high-temperature cycling performance of the electrochemical device, and allowing the electrochemical device to have relatively low direct current impedance at low SOC and operate normally. When the value of L/D is too small, for example, less than 5, the volume proportion of the bent portion in the electrode assembly is relatively large, the electrolyte is squeezed out more, the probability of electrolyte depletion in the bent portion is high, the effect of the compound represented by formula (I) is limited, and the effects of reducing the consumption rate of the electrolyte and delaying the depletion rate of the electrolyte are weak, thereby resulting in a weak effect of improving the high-temperature cycling performance of the electrochemical device. When the value of L/D is too large, for example, greater than 10, the volume proportion of the bent portion in the electrode assembly is relatively small, the electrolyte is squeezed out less, the probability of electrolyte depletion in the bent portion is low, and the effect of adding the compound represented by formula (I) to the electrolyte to participate in improving the high-temperature cycling performance of the electrochemical device is weak, which easily causes the electrochemical device to have increased impedance and increased polarization. When A is too small, for example, less than 30, the percentage of the compound represented by formula (I) is too low, the effect of enhancing the stability of the positive electrode interface is weak, and the effects of reducing the electrolyte consumption rate and delaying the electrolyte depletion rate are also weak, which is not conducive to improving the high-temperature cycling performance of the electrochemical device. When A is too large, for example, greater than 80, the percentage of the compound represented by formula (I) is too high, the impedance of the electrochemical device increases, and polarization increases, which is not conducive to improving the high-temperature cycling performance of the electrochemical device, while the direct current impedance of the electrochemical device at low SOC is also too high, affecting the normal operation of the electrochemical device. In this application, the L/D value of the electrode assembly with the wound structure is adjusted within the range of this application, the compound represented by formula (I) is added to the electrolyte, and the mass percentage A% of the compound represented by formula (I) is within the range of this application, so that the bent portion in the electrode assembly has an appropriate volume proportion, and the oxidation resistance of the compound represented by formula (I) can be exerted, the stability of the positive electrode interface can be enhanced, the consumption rate of the electrolyte can be reduced, and the depletion rate of the electrolyte in the bent portion of the electrode assembly can be delayed, thereby improving the high-temperature cycling performance of the electrochemical device, and allowing the electrochemical device to have relatively low direct current impedance at low SOC.

In some embodiments of this application, 5≤L≤30, preferably 10≤L≤20. For example, L may be 5, 10, 12, 15, 18, 20, 25, 30, or a range defined by any two of the above values. The value of L is adjusted within the above range, so that the value of L/D can be adjusted within the range of this application. This is conducive to limiting the volume proportion of the bent portion in the electrode assembly, exerting the effect of the compound represented by formula (I), enhancing the stability of the positive electrode interface, reducing the consumption rate of the electrolyte, and delaying the depletion rate of the electrolyte in the bent portion of the electrode assembly, thereby helping to improve the high-temperature cycling performance of the electrochemical device, and helping to allow the electrochemical device to have relatively low direct current impedance at low SOC.

In some embodiments of this application, 1<D<S5, preferably 1.5≤D≤2.5. For example, D may be 1, 1.5, 2, 2.5, 3, 3.4, 4, 5, or a range defined by any two of the above values. The value of D is adjusted within the above range, so that the value of L/D can be adjusted within the range of this application. This is conducive to limiting the volume proportion of the bent portion in the electrode assembly, exerting the effect of the compound represented by formula (I), enhancing the stability of the positive electrode interface, reducing the consumption rate of the electrolyte, and delaying the depletion rate of the electrolyte in the bent portion of the electrode assembly, thereby helping to improve the high-temperature cycling performance of the electrochemical device, and helping to allow the electrochemical device to have relatively low direct current impedance at low SOC.

In some embodiments of this application, the electrode assembly has a width of W mm, W=L+2D, and 10≤W≤40. For example, W may be 10, 15, 20, 23, 25, 28, 30, 35, 40, or a range defined by any two of the above values. When the width W of the electrode assembly is within the above range, the electrode assembly has a smaller size and is more suitable for small-sized electronic devices such as watches, but in a small-sized electrode assembly, the volume proportion of the bent portion is larger, the electrolyte is squeezed out more, and the probability of electrolyte depletion in the bent portion is higher. The compound represented by formula (I) is introduced into the electrolyte of the above electrochemical device, and its mass percentage A% is adjusted within the range of this application. Due to the strong oxidation resistance of the compound represented by formula (I), the oxidation reactions between the positive electrode active material and the electrolyte can be reduced, and the oxidation window of the electrolyte is widened. This allows the electrochemical device to have good stability of the positive electrode interface, and is more conducive to reducing the consumption rate of the electrolyte and delaying the depletion rate of the electrolyte in the bent portion of the electrode assembly, thereby helping to improve the high-temperature cycling performance of the electrochemical device, and helping to allow the electrochemical device to have relatively low direct current impedance at low SOC.

In some embodiments of this application, the compound represented by formula (I) includes at least one of the following compounds:

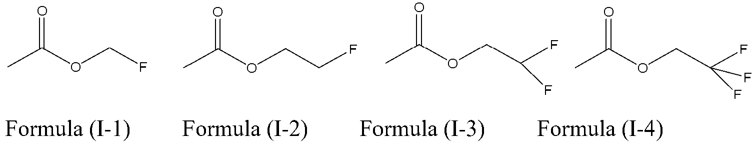

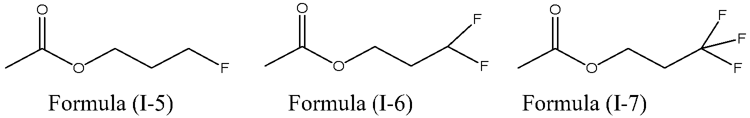

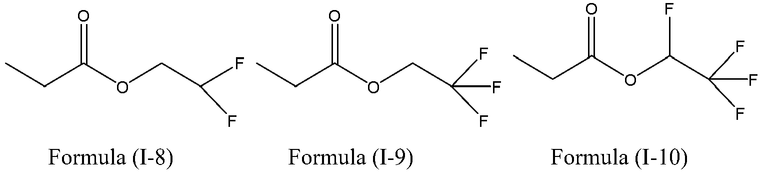

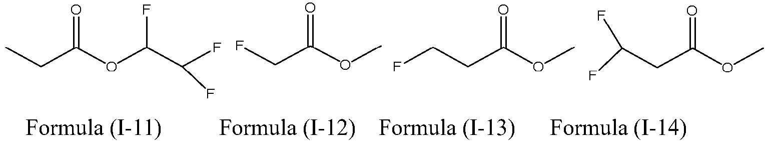

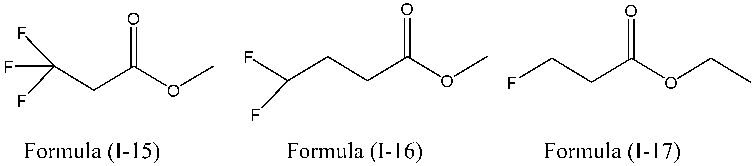

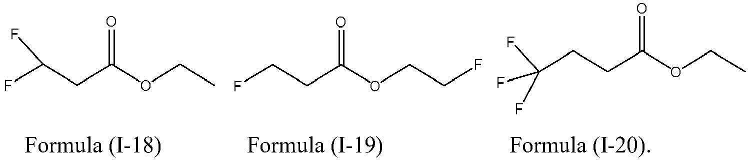

In the electrochemical device of this application, the electrolyte including the compound represented by formula (I) within the above range can better exert the oxidation resistance of the compound represented by formula (I), allow the electrochemical device to have good stability of the positive electrode interface, and help to reduce the consumption rate of the electrolyte and delay the depletion rate of the electrolyte in the bent portion of the electrode assembly, thereby helping to improve the high-temperature cycling performance of the electrochemical device, and helping to allow the electrochemical device to have relatively low direct current impedance at low SOC.

In some embodiments of this application, the electrolyte includes a non-fluorinated carboxylate ester, where the non-fluorinated carboxylate ester includes at least one of methyl formate, ethyl formate, methyl acetate, ethyl acetate, propyl acetate, methyl propionate, ethyl propionate, or propyl propionate; and based on the mass of the electrolyte, a mass percentage of the non-fluorinated carboxylate ester is B%, and 10<B<60. For example, B may be 10, 20, 26, 30, 38, 40, 44, 50, 60, or a range defined by any two of the above values. The compound represented by formula (I) has a relatively large viscosity, resulting in poor wettability of the electrolyte to the positive electrode interface and a negative electrode interface, while the non-fluorinated carboxylate ester has a structure similar to the compound represented by formula (I) and has good affinity and a smaller viscosity. On the basis of the compound represented by formula (I), further introducing the above type of non-fluorinated carboxylate ester and adjusting its mass percentage B% within the above range can allow the electrolyte to have an appropriate viscosity, improve the wettability of the positive electrode interface and the negative electrode interface, and reduce polarization, thereby helping to improve the high-temperature cycling performance of the electrochemical device, and helping to allow the electrochemical device to have relatively low direct current impedance at low SOC.

In some embodiments of this application, the electrolyte includes a cyclic carbonate, where the cyclic carbonate includes at least one of ethylene carbonate, propylene carbonate, butylene carbonate, or vinylethylene carbonate; and based on the mass of the electrolyte, a mass percentage of the cyclic carbonate is C%, and 0≤C≤10. For example, C may be 0, 2, 3.4, 4, 5, 6, 8, 10, or a range defined by any two of the above values. The compound represented by formula (I) has poor dissociation of a lithium salt. On the basis of the compound represented by formula (I), further introducing the cyclic carbonate and adjusting its mass percentage C% within the above range are conducive to the dissociation of the lithium salt, improve the conductivity of the electrolyte, are also conducive to the film formation of anions of the lithium salt, adjust a solvation structure of the electrolyte, and enhance the stability of the positive electrode interface and the negative electrode interface, thereby helping to improve the high-temperature cycling performance of the electrochemical device, and helping to allow the electrochemical device to have relatively low direct current impedance at low SOC.

In some embodiments of this application, the electrolyte includes a nitrile additive, where the nitrile additive includes at least one of succinonitrile, glutaronitrile, adiponitrile, pimelonitrile, suberonitrile, methylglutaronitrile, 1,3,5-pentanetricarbonitrile, 1,2,3-propanetricarbonitrile, 1,3,6-hexanetricarbonitrile, or 1,2,3-tris(2-cyanoethoxy)propane; and based on the mass of the electrolyte, a mass percentage of the nitrile additive is E%, and 2≤E≤10, preferably 2≤E≤6. For example, E may be 2, 4, 5, 6, 6.5, 8, 10, or a range defined by any two of the above values. The nitrile additive can complex with high-valence metal ions in the positive electrode active material to stabilize the positive electrode interface. On the basis of the compound represented by formula (I), further introducing the above type of nitrile additive and adjusting its mass percentage E% within the above range can further enhance the stability of the positive electrode interface, thereby helping to improve the high-temperature cycling performance of the electrochemical device, and helping to allow the electrochemical device to have relatively low direct current impedance at low SOC.

In some embodiments of this application, the electrolyte includes a boron-containing compound, where the boron-containing compound includes at least one of lithium bis(1,1-trifluoromethyl oxalate)borate, lithium bis(1-trifluoromethyl oxalate)borate, lithium difluoro(1,1-trifluoromethyl)oxalate borate, lithium difluorooxalate borate, lithium bis(oxalate)borate, lithium bis(1,1-trifluoromethyl malonate)borate, lithium fluoromalonate difluoroborate, or lithium bis(fluoromalonate)borate; and based on the mass of the electrolyte, a mass percentage of the boron-containing compound is F%, and 0.01≤F≤2, preferably 0.01≤F≤1. For example, F may be 0.01, 0.3, 0.4, 0.8, 1, 1.4, 1.8, 2, or a range defined by any two of the above values. The compound represented by formula (I) can enhance the stability of the positive electrode interface, while the boron-containing compound can form a stable solid electrolyte interface (SEI) film at a negative electrode to enhance the stability of the negative electrode interface. On the basis of the compound represented by formula (I), further introducing the above type of boron-containing compound and adjusting its mass percentage F% within the above range can synergistically enhance the stability of the positive electrode interface and the negative electrode interface, thereby helping to improve the high-temperature cycling performance of the electrochemical device, and helping to allow the electrochemical device to have relatively low direct current impedance at low SOC.

In this application, the electrolyte further includes another organic solvent and another additive. This application has no particular limitation on the types of the another organic solvent and the another additive, provided that the objectives of this application can be achieved. For example, the another organic solvent may include but is not limited to at least one of dimethyl carbonate (DMC), diethyl carbonate (DEC), dipropyl carbonate (DPC), methyl propyl carbonate (MPC), ethyl propyl carbonate (EPC), methyl ethyl carbonate (MEC), fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, γ-butyrolactone, decanolactone, valerolactone, caprolactone, dibutyl ether, tetraethylene glycol dimethyl ether, diethylene glycol dimethyl ether, 1,2-dimethoxyethane, 1,2-diethoxyethane, 1-ethoxy-1-methoxyethane, 2-methyltetrahydrofuran, tetrahydrofuran, dimethyl sulfoxide, 1,2-dioxolane, sulfolane, methyl sulfolane, 1,3-dimethyl-2-imidazolidinone, N-methyl-2-pyrrolidone, dimethylformamide, trimethyl phosphate, triethyl phosphate, or trioctyl phosphate. The another additive may include but is not limited to at least one of 1,3-propane sultone, vinyl sulfate, or vinylene carbonate.

In some embodiments of this application, based on the mass of the electrolyte, a sum of the mass percentages of the another organic solvent and the another additive is G%, and 0≤G≤40. For example, G may be 0, 10, 15, 20, 22, 25, 30, 33, 35, 40, or a range defined by any two of the above values.

In this application, the electrolyte further includes a lithium salt. This application has no particular limitation on the type of the lithium salt, provided that the objectives of this application can be achieved. For example, the lithium salt may include but is not limited to at least one of lithium hexafluorophosphate, lithium bis(trifluoromethanesulfonyl)imide, lithium bis(fluorosulfonyl)imide, lithium tetrafluoroborate, lithium bis(oxalate)borate, lithium difluorooxalate borate, or lithium difluorophosphate. Preferably, the lithium salt includes lithium hexafluorophosphate.

In some embodiments of this application, based on the mass of the electrolyte, a mass percentage of the lithium salt is H%, and 10≤H≤20. For example, H may be 10, 12, 14, 15, 16, 18, 20, or a range defined by any two of the above values.

In some embodiments of this application, the electrolyte may include a lithium salt, a compound represented by formula (I), a cyclic carbonate, another organic solvent, and another additive. Mass percentages of the lithium salt, the compound represented by formula (I), the cyclic carbonate, the another organic solvent, and the another additive are as described above. The electrochemical device including the above electrolyte has good high-temperature cycling performance and relatively low direct current impedance at low SOC.

In some embodiments of this application, the electrolyte may include a lithium salt, a compound represented by formula (I), a cyclic carbonate, another organic solvent, and another additive, as well as any one of a non-fluorinated carboxylate ester, a nitrile additive, or a boron-containing compound. Mass percentages of the lithium salt, the compound represented by formula (I), the cyclic carbonate, the another organic solvent, the another additive, the non-fluorinated carboxylate ester, the nitrile additive, and the boron-containing compound are as described above. The electrochemical device including the above electrolyte has good high-temperature cycling performance and relatively low direct current impedance at low SOC.

In some embodiments of this application, the electrolyte may include a lithium salt, a compound represented by formula (I), a cyclic carbonate, a non-fluorinated carboxylate ester, another organic solvent, and another additive, as well as at least one of a nitrile additive or a boron-containing compound. A mass percentage of the compound represented by formula (I) is 30% to 75%, a mass percentage of the non-fluorinated carboxylate ester is 10% to 55%, and mass percentages of the lithium salt, the cyclic carbonate, the another organic solvent, the another additive, the nitrile additive, and the boron-containing compound are as described above. The electrochemical device including the above electrolyte has good high-temperature cycling performance and relatively low direct current impedance at low SOC.

In some embodiments of this application, the electrolyte may include a lithium salt, a compound represented by formula (I), a cyclic carbonate, a nitrile additive, a boron-containing compound, another organic solvent, and another additive. Mass percentages of the lithium salt, the compound represented by formula (I), the cyclic carbonate, the nitrile additive, the boron-containing compound, another organic solvent, and another additive are as described above. The electrochemical device including the above electrolyte has good high-temperature cycling performance and relatively low direct current impedance at low SOC.

In this application, the electrode assembly includes a positive electrode plate, a negative electrode plate, and a separator, where the separator is used to separate the positive electrode plate and the negative electrode plate to prevent internal short circuits of the electrochemical device, allow electrolyte ions to pass freely, and does not affect the electrochemical charge and discharge process.

This application has no particular limitation on the positive electrode plate, provided that the objectives of this application can be achieved. For example, the positive electrode plate includes a positive electrode current collector and a positive electrode active material layer disposed on at least one surface of the positive electrode current collector. In this application, the positive electrode active material layer may be disposed on one surface of the positive electrode current collector in a thickness direction or on both surfaces of the positive electrode current collector in the thickness direction. It should be noted that the "surface" here may be an entire region of the positive electrode current collector or a partial region of the positive electrode current collector, which is not particularly limited in this application, provided that the objectives of this application can be achieved.

This application has no particular limitation on the positive electrode current collector, provided that the objectives of this application can be achieved. For example, the positive electrode current collector may include but is not limited to aluminum foil, aluminum alloy foil, or a composite current collector (for example, an aluminum-carbon composite current collector). This application has no particular limitation on the thicknesses of the positive electrode current collector and the positive electrode active material layer, provided that the objectives of this application can be achieved. For example, the thickness of the positive electrode current collector is 6 µm to 12 µm, and the thickness of the positive electrode active material layer is 30 µm to 120 µm. This application has no particular limitation on the thickness of the positive electrode plate, provided that the objectives of this application can be achieved, for example, the thickness of the positive electrode plate is 50 µm to 250 µm.

The positive electrode active material layer of this application includes a positive electrode active material. The positive electrode active material includes a substance capable of reversibly intercalating and deintercalating active ions such as lithium ions. There may be one or more positive electrode active material layers. Layers in multiple positive electrode active material layers may contain the same or different positive electrode active materials. This application has no particular limitation on the positive electrode active material, provided that the objectives of this application can be achieved. For example, the positive electrode active material may include but is not limited to at least one of lithium nickel cobalt manganese oxide (for example, NCM811, NCM622, NCM523, and NCM111), lithium nickel cobalt aluminate, lithium iron phosphate, lithium-rich manganese-based material, lithium cobalt oxide (LiCoO₂), lithium manganate, lithium iron manganese phosphate, or lithium titanate. The chemical formula of the above lithium-rich manganese-based material is LiMnO·LiMO, and M may include Ni, Co, or Mn. In this application, the surface of the positive electrode active material may be attached with a substance having a different composition. Exemplarily, the substance attached to the surface may include but is not limited to at least one of aluminum oxide, silicon dioxide, titanium dioxide, zirconium oxide, magnesium oxide, calcium oxide, boron oxide, antimony oxide, bismuth oxide, lithium sulfate, sodium sulfate, potassium sulfate, magnesium sulfate, calcium sulfate, aluminum sulfate, lithium carbonate, calcium carbonate, magnesium carbonate, or carbon. The above substances are attached to the surface of the positive electrode active material, so that the oxidation reactions of the electrolyte on the surface of the positive electrode active material can be suppressed, thereby extending the service life of the electrochemical device.

The positive electrode active material layer may further include a positive electrode conductive agent and a positive electrode binder. This application has no particular limitation on the types of the positive electrode conductive agent and the positive electrode binder, provided that the objectives of this application can be achieved. For example, the positive electrode binder may include but is not limited to at least one of polyvinyl alcohol, hydroxypropyl cellulose, diacetyl cellulose, polyvinyl chloride, carboxylated polyvinyl chloride, polyvinyl fluoride, polymer containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, or nylon. The positive electrode conductive agent may include but is not limited to at least one of a carbon-based material, a metal-based material, or a conductive polymer. Exemplarily, the carbon-based material may include at least one of natural graphite, artificial graphite, conductive carbon black (Super P), or carbon fiber. The metal-based material may include but is not limited to at least one of metal powder, metal fiber, copper, nickel, aluminum, or silver. The conductive polymer may include but is not limited to polyphenylene derivatives. This application has no particular limitation on a mass ratio of the positive electrode active material, the positive electrode conductive agent, and the positive electrode binder in the positive electrode active material layer, which may be selected according to actual needs, provided that the objectives of this application can be achieved.

This application has no particular limitation on the negative electrode plate, provided that the objectives of this application can be achieved. For example, the negative electrode plate includes a negative electrode current collector and a negative electrode active material layer disposed on at least one surface of the negative electrode current collector. In this application, the negative electrode active material layer may be disposed on one surface of the negative electrode current collector in a thickness direction or on both surfaces of the negative electrode current collector in the thickness direction. It should be noted that the "surface" here may be an entire region of the negative electrode current collector or a partial region of the negative electrode current collector, which is not particularly limited in this application, provided that the objectives of this application can be achieved.

This application has no particular limitation on the negative electrode current collector, provided that the objectives of this application can be achieved. For example, the negative electrode current collector may include but is not limited to copper foil, copper alloy foil, nickel foil, stainless steel foil, titanium foil, foamed nickel, foamed copper, or a composite current collector (for example, a carbon-copper composite current collector, a nickel-copper composite current collector, or a titanium-copper composite current collector). In this application, there is no particular limitation on the thicknesses of the negative electrode current collector and the negative electrode active material layer, provided that the objectives of this application can be achieved. For example, the thickness of the negative electrode current collector is 6 µm to 12 µm, and the thickness of the negative electrode active material layer is 30 µm to 130 µm. In this application, there is no particular limitation on the thickness of the negative electrode plate, provided that the objectives of this application can be achieved. For example, the thickness of the negative electrode plate is 50 µm to 280 µm.

The negative electrode active material layer of this application includes a negative electrode active material. There may be one or more negative electrode active material layers. Layers in the multiple negative electrode active material layers may contain the same or different negative electrode active materials. The negative electrode active material is any substance capable of reversibly intercalating and deintercalating active ions such as lithium ions. The negative electrode active material may include but is not limited to at least one of graphite, mesocarbon microbeads (MCMB), hard carbon, soft carbon, silicon, silicon-carbon composite, SiOₓ (0.5<x<1.6), Li-Sn alloy, Li-Sn-O alloy, Sn, SnO, SnO₂, spinel-structured lithium titanate-lithiated TiO₂-Li₄Ti₅O₁₂, Li-Al alloy, or metallic lithium.

The negative electrode active material layer in this application may further include a negative electrode binder and a negative electrode conductive agent; or the negative electrode active material layer may further include a negative electrode binder, a negative electrode conductive agent, and a thickener. This application has no particular limitation on the types of the negative electrode binder and the negative electrode conductive agent, provided that the objectives of this application can be achieved. For example, the negative electrode binder may include but is not limited to at least one of the above positive electrode binders. The negative electrode conductive agent may include but is not limited to at least one of the above positive electrode conductive agents. This application has no particular limitation on the type of the thickener, provided that the objectives of this application can be achieved. For example, the thickener may include but is not limited to at least one of sodium carboxymethyl cellulose or carboxymethyl cellulose.

This application has no particular limitation on the separator, provided that the objectives of this application can be achieved. For example, the material of the separator may include but is not limited to at least one of polyethylene (PE), polypropylene (PP)-based polyolefin (PO), polyester (for example, a polyethylene terephthalate (PET) film), cellulose, polyimide (PI), polyamide (PA), spandex, or aramid. The type of the separator may include at least one of a woven film, a non-woven film, a microporous film, a composite film, a rolled film, or a spun film. For example, the separator may include a substrate layer and a surface treatment layer. The substrate layer may be a non-woven fabric, film, or composite film with a porous structure. The material of the substrate layer may include at least one of polyethylene, polypropylene, polyethylene terephthalate, or polyimide. Optionally, a polypropylene porous film, a polyethylene porous film, a polypropylene non-woven fabric, a polyethylene non-woven fabric, or a polypropylene-polyethylene-polypropylene porous composite film may be used. Optionally, a surface treatment layer is disposed on at least one surface of the substrate layer, and the surface treatment layer may be a polymer layer or an inorganic substance layer, or a layer formed by mixing a polymer and an inorganic substance. For example, the inorganic substance layer includes inorganic particles and a binder. This application has no particular limitation on the inorganic particles. For example, the inorganic particles may include at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. This application has no particular limitation on the binder. For example, the binder may be at least one of the above positive electrode binders. The polymer layer contains a polymer. This application has no particular limitation on the polymer. For example, the polymer includes at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-hexafluoropropylene). In this application, there is no particular limitation on the thickness of the separator, provided that the objectives of this application can be achieved. For example, the thickness of the separator may be 5 µm to 50 µm.

The electrochemical device of this application further includes a packaging bag for accommodating the positive electrode plate, the separator, the negative electrode plate, and the electrolyte, as well as other components known in the art in the electrochemical device. This application has no particular limitation on the above other components. This application has no particular limitation on the packaging bag. The packaging bag may be a packaging bag known in the art, provided that the objectives of this application can be achieved. For example, an aluminum-plastic film packaging bag may be used.

The electrochemical device of this application is not particularly limited and may include any device in which an electrochemical reaction occurs. In some embodiments of this application, the electrochemical device may include but is not limited to a lithium-ion battery, a sodium-ion battery, a lithium polymer electrochemical device, a lithium-ion polymer electrochemical device, or the like.

The preparation process of the electrochemical device is well known to those skilled in the art, which is not particularly limited in this application. For example, the preparation process of the electrochemical device may include but is not limited to the following steps: stacking the positive electrode plate, the separator, and the negative electrode plate in sequence, and performing an operation of winding or folding the resulting stack as needed to obtain an electrode assembly with a wound structure, placing the electrode assembly in a packaging bag, injecting the electrolyte into the packaging bag, and sealing to obtain the electrochemical device. In addition, an overcurrent prevention element, a guide plate, and the like may be placed in the packaging bag as needed to prevent the pressure rise, overcharge and overdischarge inside the electrochemical device.

A second aspect of this application provides an electronic device including the electrochemical device provided in the first aspect of this application. The electrochemical device provided in this application has good high-temperature cycling performance, so that the electronic device provided in this application has a long service life and good performance.

The electronic device of this application is not particularly limited, which may be any electronic device known in the prior art. For example, the electronic device may include but is not limited to a notebook computer, a pen input computer, a mobile computer, an e-book player, a portable telephone, a portable fax machine, a portable copier, a portable printer, a stereo headset, a video recorder, a liquid crystal television, a portable cleaner, a portable CD player, a mini disc, a transceiver, an electronic notebook, a calculator, a memory card, a portable recorder, a radio, a backup power supply, a motor, an automobile, a motorcycle, a power-assisted bicycle, a bicycle, a lighting fixture, a toy, a game console, a clock, a power tool, a flash lamp, a camera, a large household battery, and a lithium-ion capacitor.

### Examples

The following more specifically illustrate some embodiments of this application by using examples and comparative examples. Various tests and evaluations were carried out according to the following methods. In addition, unless otherwise specified, "parts" and "%" are based on mass.

### Test methods and equipment:

### Test for maximum length L of flat portion and maximum radius D of bent portion of electrode assembly

An electronic computer tomography (CT) instrument was used, magnified to a magnification of 300%, to scan a bent portion and flat portion of an electrode assembly in a lithium-ion battery to obtain a cross-sectional image. A length of a first flat portion was measured and recorded as L1, a length of a second flat portion was measured and recorded as L2, and a larger one of the two was recorded as a maximum length L of the flat portion. A radius of the first bent portion was measured and recorded as D1, a radius of the second bent portion was measured and recorded as D2, and a larger one of the two was recorded as a maximum radius D of the bent portion.

### Test for high-temperature cycling performance

The test temperature was adjusted to a constant temperature of 45°C. The lithium-ion battery was charged at a constant current of 1C to 4.48 V, then charged at a constant voltage of 4.48 V to 0.05C, and then discharged at a constant current of 1C to 3.0 V. This was one charge-discharge cycle, which was the first cycle, and a discharge capacity of the first cycle was recorded. The lithium-ion battery was charged and discharged according to the above method, and a discharge capacity of each cycle was recorded until the discharge capacity of the lithium-ion battery decayed to 80% of the discharge capacity of the first cycle. The number of charge-discharge cycles was recorded as the number of cycles at 45°C.

### Test for direct current impedance (DCR)

The test temperature was adjusted to a constant temperature of 45°C. The lithium-ion battery was charged at a constant current of 0.2C to 4.48 V, then charged at a constant voltage of 4.48 V to 0.05C, and then discharged at a current of 0.1C for 8 h to make the state of charge (SOC) of the lithium-ion battery be 20% SOC. Then, the lithium-ion battery was discharged at a constant current of 0.1C for 10s, and a voltage value was recorded as U₁. Then, the lithium-ion battery was discharged at a constant current of 1C for 1s, and a voltage value was recorded as U₂.

DCR at 20% SOC = (U₂-U₁)/(1C-0.1C).

### Example 1-1

### <Preparation of electrolyte>

In an argon atmosphere glove box with a water content of less than 10 ppm, ethylene carbonate (EC) as a cyclic carbonate, propylene carbonate (PC) as a cyclic carbonate, and diethyl carbonate (DEC) as another organic solvent were well mixed according to a mass ratio of 10:10:80 to obtain a base solvent, then lithium hexafluorophosphate (LiPF₆) as a lithium salt and a compound represented by formula (I-3) of formula (I) were added to the base solvent and well mixed to obtain an electrolyte. Based on a mass of the electrolyte, a mass percentage of the lithium salt LiPF₆ was 12.5%, a mass percentage A% of the compound represented by formula (I-3) was 50%, and the rest was the base solvent.

### <Preparation of positive electrode plate>

LiCoO₂ as a positive electrode active material, conductive carbon black (Super P) as a positive electrode conductive agent, and polyvinylidene fluoride (PVDF with a weight average molecular weight Mw=7×10⁶) as a positive electrode binder were mixed according to a mass ratio of 97.5:1:1.5, and N-methylpyrrolidone (NMP) was added as a solvent. The resulting mixture was well stirred under the action of a vacuum mixer to obtain a positive electrode slurry with a solid content of 75wt%. The positive electrode slurry was uniformly applied on one surface of an aluminum foil as a positive electrode current collector with a thickness of 10 µm, followed by drying at 85°C, to obtain a positive electrode plate having one surface coated with a positive electrode active material layer with a thickness of 50 µm. Then, the above steps were repeated on another surface of the aluminum foil to obtain a positive electrode plate having both surfaces coated with positive electrode active material layers, followed by cold pressing, cutting, welding an aluminum tab as a positive electrode tab, to obtain a positive electrode plate with a specification of 74 mm×851 mm for later use.

### <Preparation of negative electrode plate>

Artificial graphite as a negative electrode active material, Super P as a negative electrode conductive agent, carboxymethyl cellulose (CMC-Na, Mw=7×10⁵) as a thickener, and styrene-butadiene rubber (SBR, Mw=5×10⁶) as a negative electrode binder were mixed according to a mass ratio of 97.5:1:0.5:1, then deionized water was added as a solvent. The resulting mixture was well stirred under the action of a vacuum mixer to obtain a negative electrode slurry with a solid content of 50wt%. The negative electrode slurry was uniformly applied on one surface of a copper foil as a negative electrode current collector with a thickness of 8 µm, followed by drying at 85°C, to obtain a negative electrode plate having one surface coated with a negative electrode active material layer with a thickness of 60 µm. Then, the above steps were repeated on another surface of the copper foil to obtain a negative electrode plate having both surfaces coated with negative electrode active material layers, followed by cold pressing, cutting, welding a nickel tab as a negative electrode tab, to obtain a negative electrode plate with a specification of 76 mm×867 mm for later use.

### <Preparation of separator>

A porous polyethylene film with a thickness of 7 µm (provided by Celgard Company) was used as the separator.

### <Preparation of lithium-ion battery>

The positive electrode plate, separator, and negative electrode plate prepared above were stacked in sequence, so that the separator was located between the positive electrode plate and the negative electrode plate for separation. Then, the resulting stack was wound to obtain an electrode assembly, where a maximum length L of a flat portion was 9 mm, a maximum radius D of a bent portion was 1.8 mm, a value of L/D was 5, and a width W of the electrode assembly was 12.6 mm. The electrode assembly was placed in an aluminum-plastic film packaging bag and dried in a vacuum oven at 85°C for 12 h to remove moisture. The electrolyte prepared above was injected. Processes such as vacuum sealing, standing, formation (charging at a constant current of 0.3C to 3.5 V, then charging at a constant current of 1C to 3.9 V), shaping, capacity testing, and secondary sealing, to obtain a lithium-ion battery.

### Examples 1-2 to 1-6

These examples were the same as Example 1-1 except that in <preparation of lithium-ion battery>, the parameters were adjusted according to Table 1, where when L and D changed, the sizes of the positive electrode plate and the negative electrode plate were the same as those in Example 1-1.

### Examples 1-7 to 1-10

These examples were the same as Example 1-3 except that in <preparation of electrolyte>, the mass percentage A% of the compound represented by formula (I-3) was adjusted according to Table 1. When the mass percentage A% of the compound represented by formula (I-3) changed, the mass percentage of the base solvent changed accordingly, while the mass ratio of EC, PC, and DEC and the mass percentage of the lithium salt remained unchanged.

### Examples 1-11 to 1-13

These examples were the same as Example 1-3 except that in <preparation of electrolyte>, the type of the compound represented by formula (I) was adjusted according to Table 1.

### Example 2-1

This example was the same as Example 1-3 except for <preparation of electrolyte>.

### <Preparation of electrolyte>

In an argon atmosphere glove box with a water content of less than 10 ppm, ethylene carbonate (EC) as a cyclic carbonate, propylene carbonate (PC) as a cyclic carbonate, and diethyl carbonate (DEC) as another organic solvent were well mixed according to a mass ratio of 10:10:80 to obtain a base solvent, then lithium hexafluorophosphate (LiPF₆) as a lithium salt, a compound represented by formula (I-3) of formula (I), and propyl propionate as a non-fluorinated carboxylate ester were added to the base solvent and well mixed to obtain an electrolyte. Based on a mass of the electrolyte, a mass percentage of the lithium salt LiPF₆ was 12.5%, a mass percentage A% of the compound represented by formula (I-3) was 65%, a mass percentage B% of propyl propionate was 10%, and the rest was the base solvent.

### Example 2-2

This example was the same as Example 2-1 except that in <preparation of electrolyte>, the mass percentage A% of the compound represented by formula (I-3) and the mass percentage B% of propyl propionate were adjusted according to Table 2. When the mass percentage A% of the compound represented by formula (I-3) and the mass percentage B% of propyl propionate changed, the mass ratio of EC, PC, and DEC, the mass percentage of the base solvent, and the mass percentage of the lithium salt remained unchanged.

### Example 2-3

This example was the same as Example 1-3 except for <preparation of electrolyte>.

### <Preparation of electrolyte>

In an argon atmosphere glove box with a water content of less than 10 ppm, the compound represented by formula (I-3) of formula (I) and propyl propionate as a non-fluorinated carboxylate ester were well mixed according to a mass ratio of 30:57.5, and then lithium hexafluorophosphate (LiPF₆) as a lithium salt was added and well mixed to obtain an electrolyte. Based on a mass of the electrolyte, a mass percentage of the lithium salt LiPF₆ was 12.5%, and the rest was the compound represented by formula (I-3) and propyl propionate.

### Examples 2-4 and 2-5

These examples were the same as Example 2-2 except that in <preparation of electrolyte>, the type of the non-fluorinated carboxylate ester was adjusted according to Table 2.

### Example 2-6

This example was the same as Example 1-3 except for <preparation of electrolyte>.

### <Preparation of electrolyte>

In an argon atmosphere glove box with a water content of less than 10 ppm, ethylene carbonate (EC) as a cyclic carbonate, propylene carbonate (PC) as a cyclic carbonate, and diethyl carbonate (DEC) as another organic solvent were well mixed according to a mass ratio of 10:10:80 to obtain a base solvent, then lithium hexafluorophosphate (LiPF₆) as a lithium salt, a compound represented by formula (I-3) of formula (I), and succinonitrile as a nitrile additive were added to the base solvent and well mixed to obtain an electrolyte. Based on a mass of the electrolyte, a mass percentage of the lithium salt LiPF₆ was 12.5%, a mass percentage A% of the compound represented by formula (I-3) was 50%, a mass percentage E% of succinonitrile was 2%, and the rest was the base solvent.

### Examples 2-7 and 2-8

These examples were the same as Example 2-6 except that in <preparation of electrolyte>, a mass percentage E% of succinonitrile was adjusted according to Table 2. When the mass percentage E% of succinonitrile changed, the mass percentage of the base solvent changed accordingly, while the mass ratio of EC, PC, and DEC, the mass percentage of the lithium salt, and the mass percentage A% of the compound represented by formula (I-3) remained unchanged.

### Example 2-9

This example was the same as Example 2-6 except that in <preparation of electrolyte>, the type of the nitrile additive and the mass percentage E% of the nitrile additive were adjusted according to Table 2. When the mass percentage E% of the nitrile additive changed, the mass percentage of the base solvent changed accordingly, while the mass ratio of EC, PC, and DEC, the mass percentage of the lithium salt, and the mass percentage A% of the compound represented by formula (I-3) remained unchanged.

### Example 2-10

This example was the same as Example 1-3 except for <preparation of electrolyte>.

### <Preparation of electrolyte>

In an argon atmosphere glove box with a water content of less than 10 ppm, ethylene carbonate (EC) as a cyclic carbonate, propylene carbonate (PC) as a cyclic carbonate, and diethyl carbonate (DEC) as another organic solvent were well mixed according to a mass ratio of 10:10:80 to obtain a base solvent, then lithium hexafluorophosphate (LiPF₆) as a lithium salt, a compound represented by formula (I-3) of formula (I), and lithium bis(oxalate)borate LiBOB as a boron-containing compound were added to the base solvent and well mixed to obtain an electrolyte. Based on a mass of the electrolyte, a mass percentage of the lithium salt LiPF₆ was 12.5%, a mass percentage A% of the compound represented by formula (I-3) was 50%, the mass percentage F% of LiBOB was 0.01%, and the rest was the base solvent.

### Examples 2-11 and 2-12

These examples were the same as Example 2-10 except that in <preparation of electrolyte>, the mass percentage F% of LiBOB was adjusted according to Table 2. When the mass percentage F% of LiBOB changed, the mass percentage of the base solvent changed accordingly, while the mass ratio of EC, PC, and DEC, the mass percentage of the lithium salt, and the mass percentage A% of the compound represented by formula (I-3) remained unchanged.

### Example 2-13

This example was the same as Example 2-10 except that in <preparation of electrolyte>, the type of the boron-containing compound and the mass percentage F% of the boron-containing compound were adjusted according to Table 2. When the mass percentage F% of the boron-containing compound changed, the mass percentage of the base solvent changed accordingly, while the mass ratio of EC, PC, and DEC, the mass percentage of the lithium salt, and the mass percentage A% of the compound represented by formula (I-3) remained unchanged.

### Example 2-14

This example was the same as Example 1-3 except for <preparation of electrolyte>.

### <Preparation of electrolyte>

In an argon atmosphere glove box with a water content of less than 10 ppm, ethylene carbonate (EC) as a cyclic carbonate, propylene carbonate (PC) as a cyclic carbonate, and diethyl carbonate (DEC) as another organic solvent were well mixed according to a mass ratio of 10:10:80 to obtain a base solvent, then lithium hexafluorophosphate (LiPF₆) as a lithium salt, a compound represented by formula (I-3) of formula (I), propyl propionate as a non-fluorinated carboxylate ester, and succinonitrile as a nitrile additive were added to the base solvent and well mixed to obtain an electrolyte. Based on a mass of the electrolyte, a mass percentage of the lithium salt LiPF₆ was 12.5%, a mass percentage A% of the compound represented by formula (I-3) was 48%, a mass percentage B% of propyl propionate was 25%, a mass percentage E% of succinonitrile was 2%, and the rest was the base solvent.

### Examples 2-15 and 2-16

These examples were the same as Example 2-14 except that in <preparation of electrolyte>, the mass percentage A% of the compound represented by formula (I-3) and the mass percentage E% of succinonitrile were adjusted according to Table 2. When the mass percentage A% of the compound represented by formula (I-3) and the mass percentage E% of succinonitrile changed, the mass ratio of EC, PC, and DEC, the mass percentage of the base solvent, the mass percentage of the lithium salt, and the mass percentage B% of propyl propionate remained unchanged.

### Example 2-17

This example was the same as Example 1-3 except for <preparation of electrolyte>.

### <Preparation of electrolyte>

In an argon atmosphere glove box with a water content of less than 10 ppm, ethylene carbonate (EC) as a cyclic carbonate, propylene carbonate (PC) as a cyclic carbonate, and diethyl carbonate (DEC) as another organic solvent were well mixed according to a mass ratio of 10:10:80 to obtain a base solvent, then lithium hexafluorophosphate (LiPF₆) as a lithium salt, a compound represented by formula (I-3) of formula (I), propyl propionate as a non-fluorinated carboxylate ester, and a boron-containing compound LiBOB were added to the base solvent and well mixed to obtain an electrolyte. Based on a mass of the electrolyte, a mass percentage of the lithium salt LiPF₆ was 12.5%, the mass percentage A% of the compound represented by formula (I-3) was 50%, the mass percentage B% of propyl propionate was 25%, the mass percentage F% of LiBOB was 0.01%, and the rest was the base solvent.

### Examples 2-18 and 2-19

These examples were the same as Example 2-17 except that in <preparation of electrolyte>, the mass percentage F% of LiBOB was adjusted according to Table 2. When the mass percentage F% of LiBOB changed, the mass percentage of the base solvent changed accordingly, while the mass ratio of EC, PC, and DEC, the mass percentage of the lithium salt, the mass percentage A% of the compound represented by formula (I-3), and the mass percentage B% of propyl propionate remained unchanged.

### Example 2-20

This example was the same as Example 1-3 except for <preparation of electrolyte>.

### <Preparation of electrolyte>

In an argon atmosphere glove box with a water content of less than 10 ppm, ethylene carbonate (EC) as a cyclic carbonate, propylene carbonate (PC) as a cyclic carbonate, and diethyl carbonate (DEC) as another organic solvent were well mixed according to a mass ratio of 10:10:80 to obtain a base solvent, then lithium hexafluorophosphate (LiPF₆) as a lithium salt, a compound represented by formula (I-3) of formula (I), succinonitrile as a nitrile additive, and a boron-containing compound LiBOB were added to the base solvent and well mixed to obtain an electrolyte. Based on a mass of the electrolyte, a mass percentage of the lithium salt LiPF₆ was 12.5%, a mass percentage A% of the compound represented by formula (I-3) was 50%, a mass percentage E% of succinonitrile was 2%, a mass percentage F% of LiBOB was 0.3%, and the rest was the base solvent.

### Examples 2-21 and 2-22

These examples were the same as Example 2-20 except that in <preparation of electrolyte>, the mass percentage E% of succinonitrile was adjusted according to Table 2. When the mass percentage E% of succinonitrile changed, the mass percentage of the base solvent changed accordingly, while the mass ratio of EC, PC, and DEC, the mass percentage of the lithium salt, the mass percentage A% of the compound represented by formula (I-3), and the mass percentage F% of LiBOB remained unchanged.

### Example 2-23

This example was the same as Example 1-3 except for <preparation of electrolyte>.

### <Preparation of electrolyte>

In an argon atmosphere glove box with a water content of less than 10 ppm, ethylene carbonate (EC) as a cyclic carbonate, propylene carbonate (PC) as a cyclic carbonate, and diethyl carbonate (DEC) as another organic solvent were well mixed according to a mass ratio of 10:10:80 to obtain a base solvent, then lithium hexafluorophosphate (LiPF₆) as a lithium salt, a compound represented by formula (I-3) of formula (I), propyl propionate as a non-fluorinated carboxylate ester, succinonitrile as a nitrile additive, and a boron-containing compound LiBOB were added to the base solvent and well mixed to obtain an electrolyte. Based on a mass of the electrolyte, a mass percentage of the lithium salt LiPF₆ was 12.5%, a mass percentage A% of the compound represented by formula (I-3) was 62.7%, a mass percentage B% of propyl propionate was 10%, a mass percentage E% of succinonitrile was 2%, a mass percentage F% of LiBOB was 0.3%, and the rest was the base solvent.

### Example 2-24

This example was the same as Example 2-23 except that in <preparation of electrolyte>, the mass percentage A% of the compound represented by formula (I-3) and the mass percentage B% of propyl propionate were adjusted according to Table 2. When the mass percentage A% of the compound represented by formula (I-3) and the mass percentage B% of propyl propionate changed, the mass ratio of EC, PC, and DEC, the mass percentage of the base solvent, the mass percentage of the lithium salt, the mass percentage E% of succinonitrile, and the mass percentage F% of LiBOB remained unchanged.

### Example 2-25

This example was the same as Example 1-3 except for <preparation of electrolyte>.

### <Preparation of electrolyte>

In an argon atmosphere glove box with a water content of less than 10 ppm, a compound represented by formula (I-3) of formula (I) and propyl propionate as a non-fluorinated carboxylate ester were well mixed according to a mass ratio of 50:37.5, then lithium hexafluorophosphate (LiPF₆) as a lithium salt was added and well mixed to obtain an electrolyte. Based on a mass of the electrolyte, a mass percentage of the lithium salt LiPF₆ was 12.5%, and the rest was the compound represented by formula (I-3) and propyl propionate.

### Comparative Examples 1 and 2

These comparative examples were the same as Example 1-1 except that in <preparation of lithium-ion battery>, the parameters were adjusted according to Table 1. When L and D changed, the sizes of the positive electrode plate and the negative electrode plate were the same as those in Example 1-1.

### Comparative Example 3

This comparative example was the same as Example 1-3 except for <preparation of electrolyte>.

### <Preparation of electrolyte>

In an argon atmosphere glove box with a water content of less than 10 ppm, ethylene carbonate (EC) as a cyclic carbonate, propylene carbonate (PC) as a cyclic carbonate, and diethyl carbonate (DEC) as another organic solvent were well mixed according to a mass ratio of 10:10:80 to obtain a base solvent, then lithium hexafluorophosphate (LiPF₆) as a lithium salt was added to the base solvent and well mixed to obtain an electrolyte. Based on a mass of the electrolyte, a mass percentage of the lithium salt LiPF₆ was 12.5%, and the rest was the base solvent.

### Comparative Examples 4 and 5

These comparative examples were the same as Example 1-3 except that in <preparation of electrolyte>, the mass percentage A% of the compound represented by formula (I-3) was adjusted according to Table 1. When the mass percentage A% of the compound represented by formula (I-3) changed, the mass percentage of the base solvent changed accordingly, while the mass ratio of EC, PC, and DEC and the mass percentage of the lithium salt remained unchanged.

The preparation parameters and performance parameters of the examples and comparative examples are shown in Table 1 and Table 2.

**Table 1**

| | L/D | L (mm) | D (mm) | W (mm) | Compound represented by formula (I) | A (%) | Cyclic carbonate | C (%) | Cycles at 45°C (cycle) | DCR at 20% SOC (mΩ) |
|---|---|---|---|---|---|---|---|---|---|---|
| Example 1-1 | 5 | 9 | 1.8 | 12.6 | Formula (I-3) | 50 | EC+PC | 7.5 | 560 | 45 |
| Example 1-2 | 7 | 14 | 2 | 18 | Formula (I-3) | 50 | EC+PC | 7.5 | 580 | 45 |
| Example 1-3 | 8.3 | 15 | 1.8 | 18.6 | Formula (I-3) | 50 | EC+PC | 7.5 | 600 | 45 |
| Example 1-4 | 9 | 13.5 | 1.5 | 16.5 | Formula (I-3) | 50 | EC+PC | 7.5 | 570 | 45 |
| Example 1-5 | 10 | 25 | 2.5 | 30 | Formula (I-3) | 50 | EC+PC | 7.5 | 550 | 45 |
| Example 1-6 | 6 | 30 | 5 | 40 | Formula (I-3) | 50 | EC+PC | 7.5 | 570 | 45 |
| Example 1-7 | 8.3 | 15 | 1.8 | 18.6 | Formula (I-3) | 30 | EC+PC | 11.5 | 550 | 43 |
| Example 1-8 | 8.3 | 15 | 1.8 | 18.6 | Formula (I-3) | 40 | EC+PC | 9.5 | 555 | 44 |
| Example 1-9 | 8.3 | 15 | 1.8 | 18.6 | Formula (I-3) | 75 | EC+PC | 2.5 | 560 | 47 |
| Example 1-10 | 8.3 | 15 | 1.8 | 18.6 | Formula (I-3) | 80 | EC+PC | 1.5 | 550 | 50 |
| Example 1-11 | 8.3 | 15 | 1.8 | 18.6 | Formula (I-2) | 50 | EC+PC | 7.5 | 610 | 44 |
| Example 1-12 | 8.3 | 15 | 1.8 | 18.6 | Formula (I-4) | 50 | EC+PC | 7.5 | 580 | 46 |
| Example 1-13 | 8.3 | 15 | 1.8 | 18.6 | Formula (I-18) | 50 | EC+PC | 7.5 | 600 | 47 |
| Comparative Example 1 | 3 | 21 | 7 | 35 | Formula (I-3) | 50 | EC+PC | 7.5 | 470 | 45 |
| Comparative Example 2 | 12 | 96 | 8 | 112 | Formula (I-3) | 50 | EC+PC | 7.5 | 480 | 44 |
| Comparative Example 3 | 8.3 | 15 | 1.8 | 18.6 | \ | \ | EC+PC | 17.5 | 450 | 40 |
| Comparative Example 4 | 8.3 | 15 | 1.8 | 18.6 | Formula (I-3) | 20 | EC+PC | 13.5 | 460 | 41 |
| Comparative Example 5 | 8.3 | 15 | 1.8 | 18.6 | Formula (I-3) | 82.5 | EC+PC | 1 | 500 | 55 |

| | | | | | | | | | | |
|---|---|---|---|---|---|---|---|---|---|---|
| Note: "\" in Table 1 indicates no corresponding parameter. | | | | | | | | | | |

From Examples 1-1 to 1-13 and Comparative Examples 1 to 5, it can be seen that in the electrochemical device of each example of this application, the L/D value of the electrode assembly with the wound structure is adjusted within the range of this application, the compound represented by formula (I) is added to the electrolyte, and the mass percentage A% of the compound represented by formula (I) is within the range of this application, so that the electrochemical device has a larger number of cycles at 45°C and relatively low DCR at 20% SOC. This indicates that the electrochemical device has better high-temperature cycling performance and relatively low direct current impedance at low SOC. In the electrochemical device of each of Comparative Examples 1 and 2, the L/D value of the electrode assembly is not within the range of this application. In the electrochemical device of Comparative Example 3, the electrolyte does not include the compound represented by formula (I). In the electrochemical device of each of Comparative Examples 4 and 5, the mass percentage A% of the compound represented by formula (I) in the electrolyte is not within the range of this application. Although the electrochemical device of each of Comparative Examples 1 to 5 has relatively low DCR at 20% SOC, the number of cycles at 45°C is smaller. This indicates that the high-temperature cycling performance of the electrochemical device is poorer, and the electrochemical device cannot simultaneously have good high-temperature cycling performance and relatively low direct current impedance at low SOC.

The L/D value of the electrode assembly typically affects the high-temperature cycling performance of the electrochemical device. From Examples 1-1 to 1-6 and Comparative Examples 1 and 2, it can be seen that when the L/D value is too small, for example, in Comparative Example 1, the number of cycles at 45°C of the electrochemical device is smaller; and when the L/D value is too large, for example, in Comparative Example 2, the number of cycles at 45°C of the electrochemical device is smaller. This indicates that the high-temperature cycling performance of the electrochemical device is poorer, and the electrochemical device cannot simultaneously have good high-temperature cycling performance and relatively low direct current impedance at low SOC. Adjusting the L/D value within the range of this application helps to exert the effect of the compound represented by formula (I) and delay the depletion rate of the electrolyte in the bent portion of the electrode assembly, so that the electrochemical device has a larger number of cycles at 45°C and relatively low DCR at 20% SOC. This indicates that the electrochemical device has better high-temperature cycling performance and relatively low direct current impedance at low SOC.

The mass percentage A% of the compound represented by formula (I) typically affects the high-temperature cycling performance of the electrochemical device. From Example 1-3, Examples 1-7 to 1-10, and Comparative Examples 3 to 5, it can be seen that when the value of A is too small, for example, in Comparative Examples 3 and 4, the effect of the compound represented by formula (I) is limited, and the number of cycles at 45°C of the electrochemical device is smaller; and when the value of A is too large, for example, in Comparative Example 5, excessive compound represented by formula (I) causes the electrochemical device to have increased direct current impedance at low SOC and increased polarization, the number of cycles at 45°C of the electrochemical device is smaller, and the DCR at 20% SOC is higher. This indicates that the high-temperature cycling performance of the electrochemical device is poorer, and the electrochemical device cannot simultaneously have good high-temperature cycling performance and relatively low direct current impedance at low SOC. Adjusting the value of A within the range of this application helps to exert the effect of the compound represented by formula (I), so that the electrochemical device has a larger number of cycles at 45°C and relatively low DCR at 20% SOC. This indicates that the electrochemical device has better high-temperature cycling performance and relatively low direct current impedance at low SOC.

The type of the compound represented by formula (I) typically affects the high-temperature cycling performance of the electrochemical device. From Example 1-3 and Examples 1-7 to 1-13, it can be seen that the electrolyte of the electrochemical device including the compound represented by formula (I) within the range of this application helps to exert the effect of the compound represented by formula (I), and the electrochemical device has a relatively large number of cycles at 45°C and relatively low DCR at 20% SOC. This indicates that the electrochemical device has good high-temperature cycling performance and relatively low direct current impedance at low SOC.

**Table 2**

| | Compound represented by formula (I) | A (%) | Non-fluorinated carboxylate ester | B (%) | Cyclic carbonate | C (%) | Nitrile additive | E (%) | Boron-containing compound | F (%) | Cycles at 45°C (cycle) | DCR at 20% SOC (mΩ) |
|---|---|---|---|---|---|---|---|---|---|---|---|---|
| Example 1-3 | Formula (I-3) | 50 | \ | \ | EC+PC | 7.5 | \ | \ | \ | \ | 600 | 45 |
| Example 2-1 | Formula (I-3) | 65 | Propyl propionate | 10 | EC+PC | 2.5 | \ | \ | \ | \ | 630 | 44 |
| Example 2-2 | Formula (I-3) | 50 | Propyl propionate | 25 | EC+PC | 2.5 | \ | \ | \ | \ | 620 | 42 |
| Example 2-3 | Formula (I-3) | 30 | Propyl propionate | 57.5 | \ | \ | \ | \ | \ | \ | 605 | 38 |
| Example 2-4 | Formula (I-3) | 50 | Ethyl acetate | 25 | EC+PC | 2.5 | \ | \ | \ | \ | 615 | 40 |
| Example 2-5 | Formula (I-3) | 50 | Ethyl formate | 25 | EC+PC | 2.5 | \ | \ | \ | \ | 610 | 35 |
| Example 2-6 | Formula (I-3) | 50 | \ | \ | EC+PC | 7.1 | Succinonitrile | 2 | \ | \ | 640 | 47 |
| Example 2-7 | Formula (I-3) | 50 | \ | \ | EC+PC | 6.7 | Succinonitrile | 4 | \ | \ | 630 | 50 |
| Example 2-8 | Formula (I-3) | 50 | \ | \ | EC+PC | 6.3 | Succinonitrile | 6 | \ | \ | 610 | 55 |
| Example 2-9 | Formula (I-3) | 50 | \ | \ | EC+PC | 6.9 | 1,3,6-hexanetricarbonitrile | 3 | \ | \ | 660 | 51 |
| Example 2-10 | Formula (I-3) | 50 | \ | \ | EC+PC | 7.498 | \ | \ | LiBOB | 0.01 | 610 | 46 |
| Example 2-11 | Formula (I-3) | 50 | \ | \ | EC+PC | 7.44 | \ | \ | LiBOB | 0.3 | 660 | 48 |
| Example 2-12 | Formula (I-3) | 50 | \ | \ | EC+PC | 7.3 | \ | \ | LiBOB | 1 | 700 | 53 |
| Example 2-13 | Formula (I-3) | 50 | \ | \ | EC+PC | 7.4 | \ | \ | LiDFOB | 0.5 | 655 | 48 |
| Example 2-14 | Formula (I-3) | 48 | Propyl propionate | 25 | EC+PC | 2.5 | Succinonitrile | 2 | \ | \ | 660 | 44 |
| Example 2-15 | Formula (I-3) | 46 | Propyl propionate | 25 | EC+PC | 2.5 | Succinonitrile | 4 | \ | \ | 650 | 46 |
| Example 2-16 | Formula (I-3) | 44 | Propyl propionate | 25 | EC+PC | 2.5 | Succinonitrile | 6 | \ | \ | 645 | 49 |
| Example 2-17 | Formula (I-3) | 50 | Propyl propionate | 25 | EC+PC | 2.498 | \ | \ | LiBOB | 0.01 | 625 | 43 |
| Example 2-18 | Formula (I-3) | 50 | Propyl propionate | 25 | EC+PC | 2.44 | \ | \ | LiBOB | 0.3 | 680 | 45 |
| Example 2-19 | Formula (I-3) | 50 | Propyl propionate | 25 | EC+PC | 2.3 | \ | \ | LiBOB | 1 | 720 | 50 |
| Example 2-20 | Formula (I-3) | 50 | \ | \ | EC+PC | 7.04 | Succinonitrile | 2 | LiBGB | 0.3 | 700 | 50 |
| Example 2-21 | Formula (I-3) | 50 | \ | \ | EC+PC | 6.64 | Succinonitrile | 4 | LiBGB | 0.3 | 690 | 52 |
| Example 2-22 | Formula (I-3) | 50 | \ | \ | EC+PC | 6.24 | Succinonitrile | 6 | LiBGB | 0.3 | 675 | 56 |
| Example 2-23 | Formula (I-3) | 62.7 | Propyl propionate | 10 | EC+PC | 2.5 | Succinonitrile | 2 | LiBGB | 0.3 | 735 | 50 |
| Example 2-24 | Formula (I-3) | 43 | Propyl propionate | 29.7 | EC+PC | 2.5 | Succinonitrile | 2 | LiBGB | 0.3 | 720 | 47 |
| Example 2-25 | Formula (I-3) | 50 | Propyl propionate | 37.5 | \ | \ | \ | \ | \ | \ | 615 | 40 |

| | | | | | | | | | | | | |
|---|---|---|---|---|---|---|---|---|---|---|---|---|
| Note: "\" in Table 2 indicates no corresponding parameter. | | | | | | | | | | | | |

The mass percentage B% of the non-fluorinated carboxylate ester typically affects the high-temperature cycling performance of the electrochemical device. From Example 1-3 and Examples 2-1 to 2-3, it can be seen that when the electrolyte of the electrochemical device includes the compound represented by formula (I) and the cyclic carbonate, the non-fluorinated carboxylate ester is further introduced, and the mass percentage B% of the non-fluorinated carboxylate ester is adjusted within the range of this application, the electrochemical device has a larger number of cycles at 45°C and lower DCR at 20% SOC. This indicates that the electrochemical device has good high-temperature cycling performance and relatively low direct current impedance at low SOC. This is because the non-fluorinated carboxylate ester has a lower viscosity. Further introducing the non-fluorinated carboxylate ester into the electrolyte and adjusting B% within the range of this application can alleviate the problem of high viscosity of the compound represented by formula (I), allow the electrolyte to have an appropriate viscosity, improve the wettability of the positive electrode interface and the negative electrode interface, and reduce polarization.

The type of the non-fluorinated carboxylate ester typically affects the high-temperature cycling performance of the electrochemical device. From Example 1-3 and Examples 2-1 to 2-5, it can be seen that when the electrolyte of the electrochemical device includes the compound represented by formula (I) and the cyclic carbonate, the non-fluorinated carboxylate ester is further introduced, and the non-fluorinated carboxylate ester is selected from the range of this application, the electrochemical device has a larger number of cycles at 45°C and lower DCR at 20% SOC. This indicates that the electrochemical device has good high-temperature cycling performance and relatively low direct current impedance at low SOC. This is because the non-fluorinated carboxylate ester has a lower viscosity. Further introducing the non-fluorinated carboxylate ester within the range of this application into the electrolyte can alleviate the problem of high viscosity of the compound represented by formula (I), allow the electrolyte to have an appropriate viscosity, improve the wettability of the positive electrode interface and the negative electrode interface, and reduce polarization.

The mass percentage E% of the nitrile additive typically affects the high-temperature cycling performance of the electrochemical device. From Example 1-3 and Examples 2-6 to 2-8, it can be seen that when the electrolyte of the electrochemical device includes the compound represented by formula (I) and the cyclic carbonate, the nitrile additive is further introduced, and the mass percentage E% of the nitrile additive is adjusted within the range of this application, the electrochemical device has a larger number of cycles at 45°C and relatively low DCR at 20% SOC. This indicates that the electrochemical device has good high-temperature cycling performance and relatively low direct current impedance at low SOC. This is because the nitrile additive can stabilize the positive electrode interface. Further introducing the nitrile additive into the electrolyte and adjusting E% within the range of this application can further enhance the stability of the positive electrode interface.

The type of the nitrile additive typically affects the high-temperature cycling performance of the electrochemical device. From Example 1-3 and Examples 2-6 to 2-9, it can be seen that when the electrolyte of the electrochemical device includes the compound represented by formula (I) and the cyclic carbonate, the nitrile additive is further introduced, and the nitrile additive is selected from the range of this application, the electrochemical device has a larger number of cycles at 45°C and relatively low DCR at 20% SOC. This indicates that the electrochemical device has good high-temperature cycling performance and relatively low direct current impedance at low SOC. This is because the nitrile additive can stabilize the positive electrode interface. Further introducing the nitrile additive within the range of this application into the electrolyte can further enhance the stability of the positive electrode interface.

The mass percentage F% of the boron-containing compound typically affects the high-temperature cycling performance of the electrochemical device. From Example 1-3 and Examples 2-10 to 2-12, it can be seen that when the electrolyte of the electrochemical device includes the compound represented by formula (I) and the cyclic carbonate, the boron-containing compound is further introduced, and the mass percentage F% of the boron-containing compound is adjusted within the range of this application, the electrochemical device has a larger number of cycles at 45°C and relatively low DCR at 20% SOC. This indicates that the electrochemical device has good high-temperature cycling performance and relatively low direct current impedance at low SOC. This is because the boron-containing compound can form a stable solid electrolyte interface (SEI) film at the negative electrode to enhance the stability of the negative electrode interface. Further introducing the boron-containing compound into the electrolyte and adjusting F% within the range of this application can synergistically enhance the stability of the positive electrode interface and the negative electrode interface.

The type of the boron-containing compound typically affects the high-temperature cycling performance of the electrochemical device. From Example 1-3 and Examples 2-10 to 2-13, it can be seen that when the electrolyte of the electrochemical device includes the compound represented by formula (I) and the cyclic carbonate, the boron-containing compound is further introduced, and the boron-containing compound is selected from the range of this application, the electrochemical device has a larger number of cycles at 45°C and relatively low DCR at 20% SOC. This indicates that the electrochemical device has good high-temperature cycling performance and relatively low direct current impedance at low SOC. This is because the boron-containing compound can form a stable solid electrolyte interface (SEI) film at the negative electrode to enhance the stability of the negative electrode interface. Further introducing the boron-containing compound within the range of this application into the electrolyte can synergistically enhance the stability of the positive electrode interface and the negative electrode interface.

From Example 1-3 and Examples 2-14 to 2-24, it can be seen that when the electrolyte of the electrochemical device includes the compound represented by formula (I) and the cyclic carbonate, and at least two of the non-fluorinated carboxylate ester, the nitrile additive, or the boron-containing compound are further introduced, the electrochemical device has a larger number of cycles at 45°C and relatively low DCR at 20% SOC. This indicates that the electrochemical device has good high-temperature cycling performance and relatively low direct current impedance at low SOC. The compound represented by formula (I) has good compatibility and additive effects with the cyclic carbonate, the nitrile additive, or the boron-containing compound. The combination of the above substances applied to the electrochemical device is more conducive to allowing the electrochemical device to simultaneously have good high-temperature cycling performance and relatively low direct current impedance at low SOC.

From Example 1-3, Example 2-3, and Example 2-25, it can be seen that when the electrolyte of the electrochemical device includes the compound represented by formula (I) and the non-fluorinated carboxylate ester, but does not include the cyclic carbonate, the electrochemical device has a larger number of cycles at 45°C and lower DCR at 20% SOC. This indicates that the electrochemical device has good high-temperature cycling performance and relatively low direct current impedance at low SOC.

It should be noted that the terms "include", "contain", or any other variants thereof are intended to cover non-exclusive inclusion, so that a process, method, or article that includes a series of elements not only includes those elements, but also includes other elements not explicitly listed, or also includes elements inherent to such process, method, or article.

The various embodiments in this specification are described in a related manner, and the same or similar parts between the various embodiments can be referred to each other. The description of each embodiment focuses on the differences from other embodiments.

The above are only preferred embodiments of this application and are not intended to limit this application. Any modifications, equivalent replacements, improvements, and the like made within the spirit and principle of this application shall be included within the scope of protection of this application.

## Claims

1. An electrochemical device, comprising an electrode assembly and an electrolyte, wherein the electrode assembly has a wound structure, and
the electrode assembly comprises a bent portion and a flat portion, wherein the flat portion has a maximum length of L mm, the bent portion has a maximum radius of D mm, and 5≤L/D≤10; and
the electrolyte comprises a compound represented by formula (I): 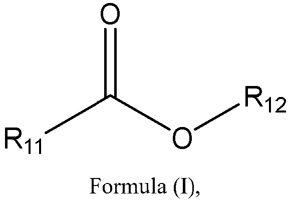
wherein R₁₁ and R₁₂ are each independently selected from a fluorine-substituted or unsubstituted C₁ to C₁₀ alkyl, and at least one of R₁₁ or R₁₂ is fluorine-substituted; wherein
based on a mass of the electrolyte, a mass percentage of the compound represented by formula (I) is A%, and 30≤A≤80.

2. The electrochemical device according to claim 1, wherein 5≤L≤30 or 1<D<S5.

3. The electrochemical device according to claim 1, wherein the electrochemical device satisfies any one of the following:
(a) 40≤A≤75;
(b) 7≤L/D≤9;
(c) 10≤L≤20; or
(d) 1.5≤D≤2.5.

4. The electrochemical device according to claim 1, wherein the electrode assembly has a width of W mm, W=L+2D, and 10<W<40.

5. The electrochemical device according to claim 1, wherein the compound represented by formula (I) comprises at least one of the following compounds:

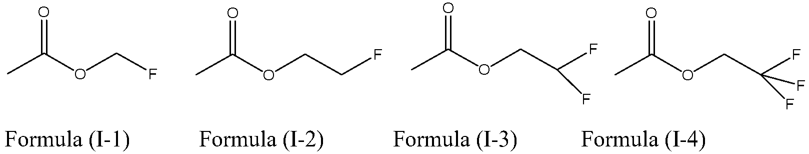

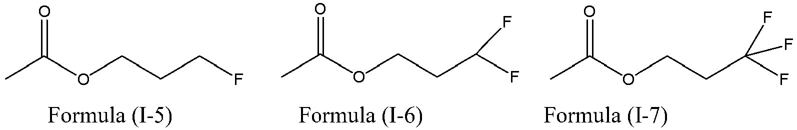

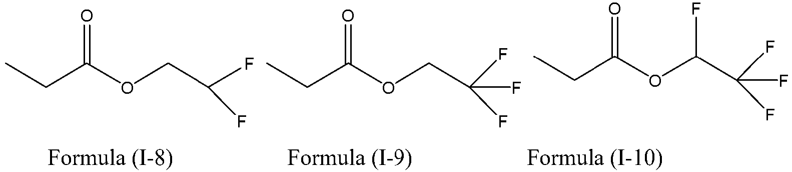

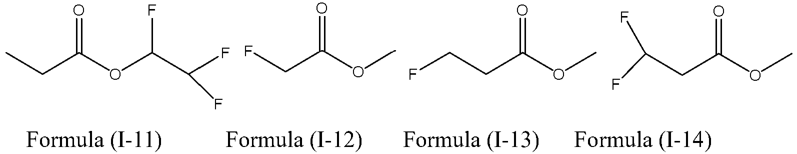

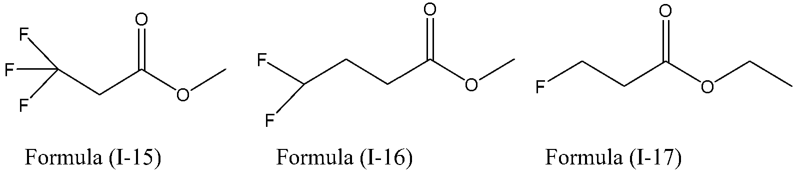

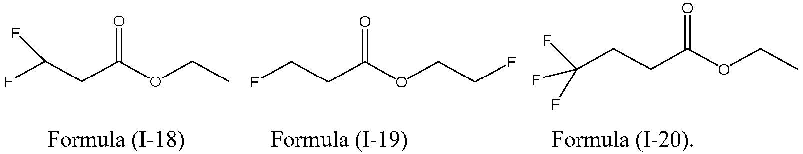

6. The electrochemical device according to claim 1, wherein the electrolyte comprises a non-fluorinated carboxylate ester, wherein the non-fluorinated carboxylate ester comprises at least one of methyl formate, ethyl formate, methyl acetate, ethyl acetate, propyl acetate, methyl propionate, ethyl propionate, or propyl propionate; and
based on the mass of the electrolyte, a mass percentage of the non-fluorinated carboxylate ester is B%, and 10<B<60.

7. The electrochemical device according to claim 1, wherein the electrolyte comprises a cyclic carbonate, wherein the cyclic carbonate comprises at least one of ethylene carbonate, propylene carbonate, butylene carbonate, or vinylethylene carbonate; and
based on the mass of the electrolyte, a mass percentage of the cyclic carbonate is C%, and 0≤C≤10.

8. The electrochemical device according to claim 1, wherein the electrolyte comprises a nitrile additive, wherein the nitrile additive comprises at least one of succinonitrile, glutaronitrile, adiponitrile, pimelonitrile, suberonitrile, methylglutaronitrile, 1,3,5-pentanetricarbonitrile, 1,2,3-propanetricarbonitrile, 1,3,6-hexanetricarbonitrile, or 1,2,3-tris(2-cyanoethoxy)propane; and
based on the mass of the electrolyte, a mass percentage of the nitrile additive is E%, and 2<E< 10.

9. The electrochemical device according to claim 1, wherein the electrolyte comprises a boron-containing compound, wherein the boron-containing compound comprises at least one of lithium bis(l, I - trifluoromethyl oxalate)borate, lithium bis(1-trifluoromethyl oxalate)borate, lithium difluoro(1,1-trifluoromethyl)oxalate borate, lithium difluorooxalate borate, lithium bis(oxalate)borate, lithium bis(1,1-trifluoromethyl malonate)borate, lithium fluoromalonate difluoroborate, or lithium bis(fluoromalonate)borate; and
based on the mass of the electrolyte, a mass percentage of the boron-containing compound is F%, and 0.01≤F≤2.

10. An electronic device, comprising the electrochemical device according to any one of claims 1 to 9.
